# EUROPEAN PATENT APPLICATION

(11) **EP 2 611 241 A2**
(43) Date of publication of application: **03.07.2013**
(21) Application number: 12188908.3
(22) Date of filing: 17.10.2012
(51) Int. Cl.: H04W 72/00

(54) **Broadcast device, assisting device, coordinating device, method for charging assisting broadcast service and charging server using the same, method for collaborative direct communication and collaborative direct communication system using the same**

(30) Priority: 28.12.2011 US 201161581077 P; 13.01.2012 US 201261586706 P; 21.08.2012 US 201213591206
(71) Applicant: Industrial Technology Research Institute, Chutung Hsinchu 31040 (TW)
(72) Inventor: Zheng, Yan-Xiu, Zhubei City 302 Hsinchu County (TW)
(74) Representative: Becker Kurig Straus

(57) **Abstract**

A collaborative direct communication system including a broadcast device, at least one coordinating device and at least one assisting device is provided. The broadcast device is configured for transmitting an assistance transmission request based on a broadcast content which is to be transmitted. The at least one coordinating device is configured for transmitting a confirm signal to the broadcast device and broadcasting an assistance command in response to the assistance transmission request. The at least one assisting device is configured for providing an assisting broadcast service of transmitting the broadcast content in response to the assistance command. After the broadcast device receives the confirm signal, the broadcast device and the at least one assisting device broadcast the broadcast content. Furthermore, a collaborative direct communication method adapted to the coordinating device of the foregoing collaborative direct communication system is also provided.

## Description

### CROSS-REFERENCE TO RELATED APPLICATION

This application claims the priority benefit of U.S. provisional application serial no. 61/586,706, filed on January 13, 2012, U.S. provisional application serial no. 61/581,077, filed on December 28, 2011, and U.S. non provisional application serial no. 13/591,206, filed on August 21, 2012. The entirety of the above-mentioned patent application is hereby incorporated by reference herein and made a part of this specification.

### TECHNICAL FIELD

The disclosure relates to a method for collaborative direct communication and the collaborative direct communication system using the same method.

### BACKGROUND

Advertisement is an attractive service to increase the revenue for service provider. The charging of advertisement proportionally increases with the number of reception devices or population. In order to increase the number of population receiving the advertisement, increasing transmission power is a normal approach. Another approach is multimedia broadcast multicast service (MBMS) which has been widely introduced in current standards such as long term evolution (LTE) and worldwide interoperability for microwave access (WiMAX). However, both approaches rely on expensive base stations such as LTE or WiMAX base stations. The large cell communication consumes more power to achieve a larger transmission coverage, and the deployment cost is higher. If the desired coverage is not necessary to be such large, resources might be wasted.

### SUMMARY

The disclosure is directed to a method for collaborative direct communication and the collaborative direct communication system using the same method.

A collaborative direct communication system is introduced herein. According to an exemplary embodiment, the collaborative direct communication system comprises a broadcast device, at least one coordinating device and at least one assisting device. The broadcast device is configured for transmitting an assistance transmission request based on a broadcast content which is to be transmitted. The at least one coordinating device is configured for transmitting an assistance command to at least one assisting device in response to the assistance transmission request, The at least one assisting device is configured for providing an assisting broadcast service of transmitting the broadcast content in response to the assistance command.

A method for collaborative direct communication, which is adapted to at least one coordinating device of a collaborative direct communication system is introduced herein. According to an exemplary embodiment, the method for collaborative direct communication comprises the following steps: receiving by the at least one coordinating device an assistance transmission request from a broadcast device based on a broadcast content which is to be transmitted; transmitting by the at least one coordinating device an assistance command to at least one assisting device in response to the assistance transmission request; commanding by the at least one coordinating device at least one assisting device to provide an assisting broadcast service of transmitting the broadcast content by the assistance command.

A broadcast device is introduced herein. According to an exemplary embodiment, the broadcast device comprises a broadcast content generating device unit, a request unit and a communication unit. The broadcast content generating device unit generates a broadcast content. The request unit generates an assistance transmission request for requesting at least one coordinating device for an assisting broadcast service. The communication unit transmits the broadcast content and the assistance transmission request to the at least one coordinating device, and receives a confirm signal from the at least one coordinating device.

An assisting device is introduced herein. According to an exemplary embodiment, the assisting device comprises a communication unit, a storage unit and a control unit. The communication unit receives a broadcast content. The storage unit stores the broadcast content. The control unit controls the communication unit to transmit the broadcast content to provide an assisting broadcast service in response to an assistance command received from a coordinating device.

A coordinating device is introduced herein. According to an exemplary embodiment, the coordinating device comprises a communication unit and a processing unit. The communication unit receives an assistance transmission request from a broadcast device. The processing unit generates an assistance command and a confirm signal in response to the assistance transmission request. The communication unit transmits the assistance command to at least one assisting device to perform an assisting broadcast service.

A charging server is introduced herein. According to an exemplary embodiment, the charging server comprises a price determination unit. The price determination unit is configured for determining a price about an assisting broadcast service requested by the broadcast device. When the price is accepted by the broadcast device, the at least one coordinating device controls at least one assisting device to broadcast a broadcast content of the broadcast device to provide an assisting broadcast service.

A method for charging an assisting broadcast service, which is adapted to a charging server of a collaborative direct communication system is introduced herein. According to an exemplary embodiment, the method for charging the assisting broadcast service comprises the following step: determining a price about an assisting broadcast service requested by a broadcast device. When the price is accepted by the broadcast device, at least one coordinating device controls at least one assisting device to broadcast a broadcast content of the broadcast device to provide the assisting broadcast service.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1A is a schematic diagram illustrating a collaborative direct communication system according to an exemplary embodiment of the disclosure.

FIG. 1B is a flow chart illustrating a method for collaborative direct communication according to an exemplary embodiment of the disclosure.

FIG. 2 is a schematic diagram illustrating a collaborative direct communication system according to an exemplary embodiment of the disclosure.

FIG. 3 is a schematic diagram illustrating a collaborative direct communication system according to an exemplary embodiment of the disclosure.

FIG. 4 is a schematic diagram illustrating a group transmission configuration according to an exemplary embodiment of the disclosure.

FIG. 5 is a schematic flow illustrating a time domain repetition transmission method according to an exemplary embodiment of the disclosure.

FIG. 6 is a schematic flow illustrating a concurrent transmission method according to an exemplary embodiment of the disclosure.

FIG. 7 is a schematic diagram illustrating a feasible implementation of the concurrent transmission method according to an exemplary embodiment of the disclosure.

FIG. 8 is a schematic diagram illustrating a feasible implementation of the concurrent transmission method according to an exemplary embodiment of the disclosure.

FIG. 9 is a schematic diagram illustrating a feasible implementation of the concurrent transmission method according to an exemplary embodiment of the disclosure.

FIG. 10 is a schematic diagram illustrating a feasible implementation of the concurrent transmission method according to an exemplary embodiment of the disclosure.

FIG. 11 is a schematic flow illustrating a hybrid implementation of both of the time domain repetition and the concurrent transmission method according to an exemplary embodiment of the disclosure.

FIG. 12 is a functional block diagram illustrating a broadcast device according to an exemplary embodiment of the disclosure.

FIG. 13 is a functional block diagram illustrating an assisting device according to an exemplary embodiment of the disclosure.

FIG. 14 is a functional block diagram illustrating an coordinating device according to an exemplary embodiment of the disclosure.

FIG. 15 is a functional block diagram illustrating a charging server according to an exemplary embodiment of the disclosure.

### DETAILED DESCRIPTION OF DISCLOSED EMBODIMENTS

Some embodiments of the present application will now be described more fully hereinafter with reference to the accompanying drawings, in which some, but not all embodiments of the application are shown. Indeed, various embodiments of the application may be embodied in many different forms and should not be construed as limited to the embodiments set forth herein; rather, these embodiments are provided so that this disclosure will satisfy applicable legal requirements. Like reference numerals refer to like elements throughout.

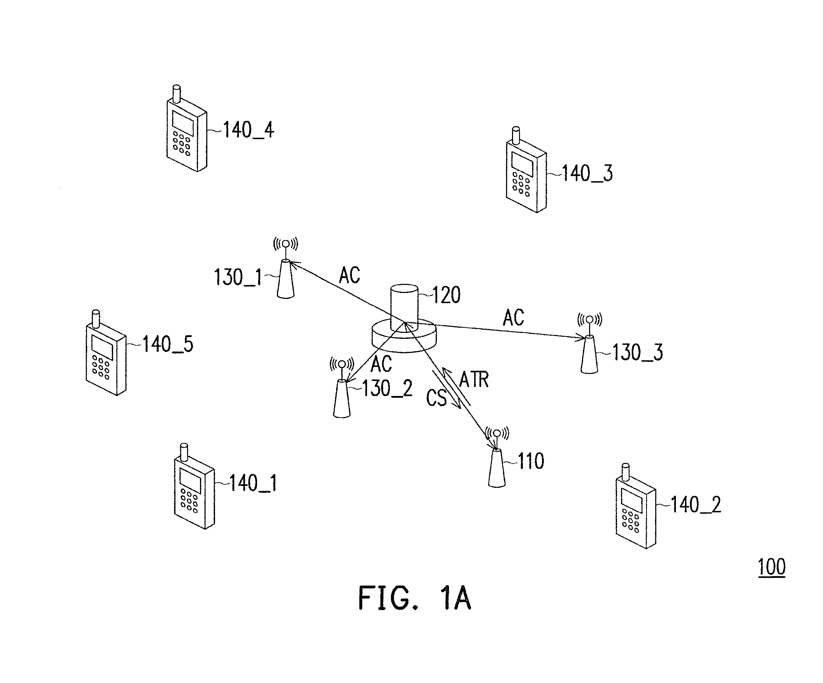

FIG. 1A is a schematic diagram illustrating a collaborative direct communication system 100 according to an exemplary embodiment of the disclosure. Referring to FIG. 1A, the collaborative direct communication system 100 includes a broadcast device 110, a coordinating device 120 and assisting devices 130_1-130_3. The broadcast device 110 is configured for transmitting an assistance transmission request ATR based on a broadcast content which is to be transmitted. The broadcast device 110 may be a cell phone, a smartphone, a personal computer, a tablet, a netbook, a notebook, and a personal digital assistant (PDA), etc. The broadcast content may be, for example, advertisement, music, image, video, or other kind of information that the broadcast device 110 wants to transmit to listening devices 140_1-140_5. When the broadcast device 110 is with limited transmission range or limited power, and is desired to transmit the broadcast content (e.g. advertisement) to the listening devices 140_1-140_5 within a wide range, the broadcast device 110 asks the coordinating device 120 for helping the transmission of the broadcast content by the assistance transmission request ATR.

In response to the assistance transmission request ATR, the coordinating device 120 transmits a confirm signal CS to the broadcast device 110 for confirming that the coordinating device 120 has received the assistance transmission request ATR. Afterwards, the coordinating device 120 broadcasts an assistance command AC to the assisting devices 130_1-130_3 in order to control the assisting devices 130_1-130_3 for assisting the transmission of the broadcast content.

The assisting devices 130_1-130_3 provide an assisting broadcast service of transmitting the broadcast content in response to the assistance command AC. Each of the assisting devices 130_1-130_3 may be a cell phone, a smartphone, a personal computer, a tablet, a netbook, a notebook, and a PDA, etc. The assisting broadcast service may be regarded as assisting the broadcast device 110 to transmit the broadcast content (e.g., advertisement) to the listening devices 140_1-140_5. Besides, after the broadcast device 110 receives the confirm signal CS, the broadcast device 110 also starts its own transmission of the broadcast content.

In other words, the assisting broadcast service of this exemplary embodiment may be implemented via a plurality of assisting devices with small transmission ranges to construct a larger transmission range compared with the transmission range of the broadcast device 110.

It is noted that ways of direct communications (e.g., Bluetooth, Wi-Fi direct, Zigbee, etc.) may be adopted to implement the communications among the broadcast device 110, the coordinating device 120, the assisting devices 130_1-130_3 and the listening devices 140_1-140_5.

In other embodiments, an assisting device may also ask for an assisting broadcast service. Since the assisting device may be, for example, a smartphone, a tablet or a notebook, etc., it may be desired to transmit its own broadcast content (e.g., advertisement). In this kind of situation, the assisting device may also be viewed as a broadcast device. In other words, each of the assisting devices not only provides the assisting broadcast service, but also asks for the assisting broadcast service as a broadcast device. Hence, all of the assisting devices in the exemplary embodiments of the disclosure may be replaced by broadcast devices with the capabilities of providing the assisting broadcast services.

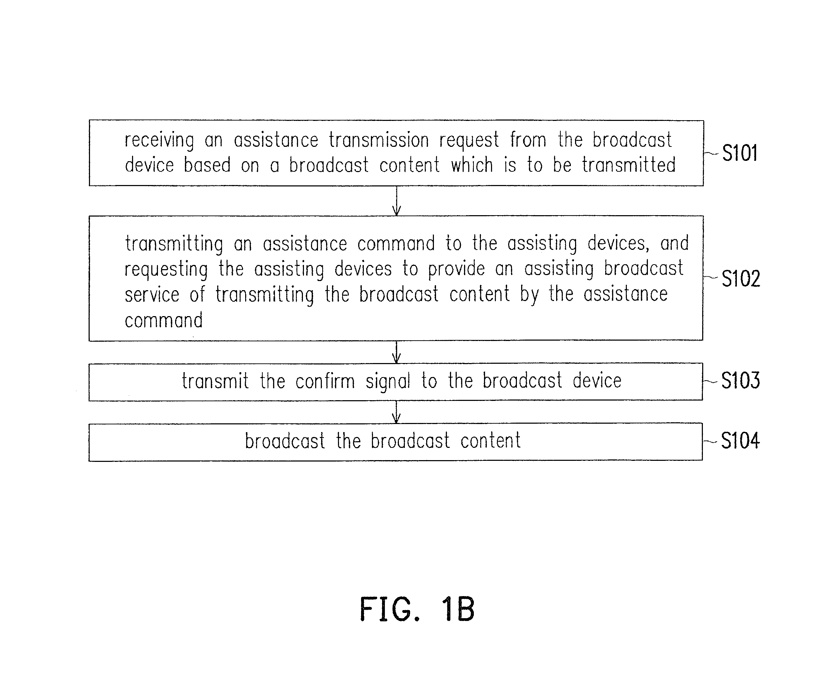

FIG. 1B is a flow chart illustrating a method for collaborative direct communication according to an exemplary embodiment of the disclosure. Referring to both FIG. 1A and FIG. 1B, the proposed method for collaborative direct communication may be adapted for the foregoing collaborative direct communication system 100, but the disclosure is not limited thereto. In step S101, the coordinating device 120 receives an assistance transmission request ATR from the broadcast device 110 based on a broadcast content which is to be transmitted. In step S102, the coordinating device 120 transmits an assistance command AC to the assisting devices 130_1-130_3, and requests the assisting devices 130_1-130_3 to provide an assisting broadcast service of transmitting the broadcast content by the assistance command AC. In step S103, the coordinating device 120 transmit the confirm signal CS to the broadcast device 110. In step S104, the broadcast device 110 and the assisting device 130_1-130_3 broadcast the broadcast content. The step S103 may be performed before the step S102. The step S104 may be not necessary.

Besides, the method for collaborative direct communication described in this embodiment of the disclosure is sufficiently taught, suggested, and embodied in the embodiments illustrated in FIG. 1A, and therefore no further description is provided herein.

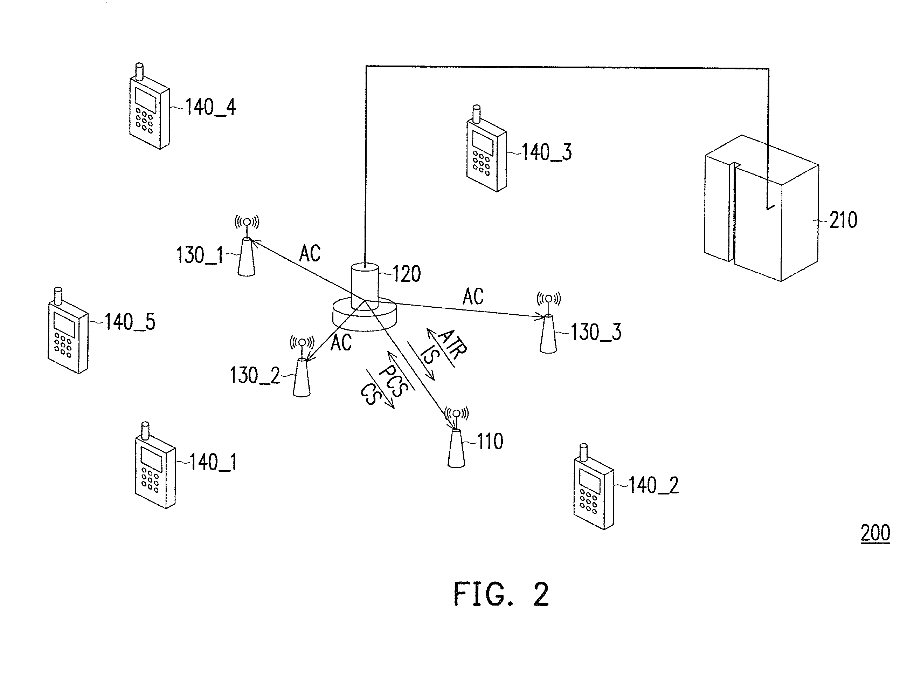

FIG. 2 is a schematic diagram illustrating a collaborative direct communication system 200 according to an exemplary embodiment of the disclosure. Referring to FIG. 2, compared with the collaborative direct communication system 100 illustrated in FIG. 1, the collaborative direct communication system 200 further includes a charging server 210. The charging server 210 is configured for charging the broadcast device 110 for the assisting broadcast service. In detail, before the coordinating device 120 transmits the confirm signal CS, the broadcast device 110 may communicate with the charging server 210 through the coordinating device 120 to obtain a price about the assisting broadcast service and informs the broadcast device 110 about the price via an informing signal IS. After the broadcast device 110 returns a price confirm signal PCS to represent the price is acceptable, the coordinating device 120 transmits the confirm signal CS to the broadcast device 110 and the assistance command AC to the assisting devices 130_1-130_3.

In an exemplary embodiment, the charging server 210 may include a storage server configured for storing associated information about the broadcast content. In detail, when the broadcast device 110 transmits the assistance transmission request ATR to the coordinating device 120, the broadcast device 110 further transmits the broadcast content at the same time. Then, the coordinating device 120 forwards the broadcast content to the charging server 210, such that the associated information about the broadcast content is stored in the storage server. Therefore, when the coordinating device 120 commands the assisting devices 130_1-130_3 to provide the assisting broadcast service, the charging server 210 forwards the broadcast content to the assisting devices 130_1-130_3 via the coordinating device 120. Besides, when the listening devices 140_1-140_5 obtain some desired information from the broadcast content, the listening devices 140_1-140_5 access the storage server to further acquire the associated information about the broadcast content.

In another exemplary embodiment, the charging server 210 may charge the broadcast device 110 according to the number of assisting devices providing the assisting broadcast service. That is, when the number of assisting devices increases, the price of the assisting broadcast service is correspondingly increased. However, the feasible implementation of the disclosure is not limited thereto.

In yet another exemplary embodiment, the charging server 210 may charge the broadcast device 110 according to the number of coordinating devices associated with the assisting broadcast service. That is, when the number of coordinating devices increases, the price of the assisting broadcast service is correspondingly increased. However, the feasible implementation of the disclosure is not limited thereto.

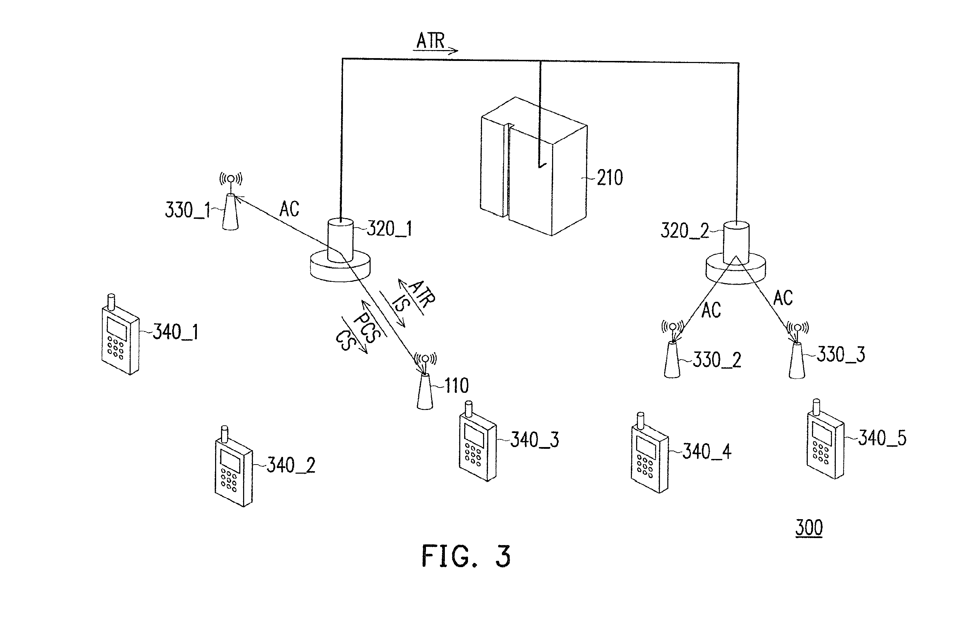

FIG. 3 is a schematic diagram illustrating a collaborative direct communication system 300 according to an exemplary embodiment of the disclosure. Referring to FIG. 3, the collaborative direct communication system 300 includes two coordinating devices 320_1-320_2. When assisting devices 340_4-340_5 is out of the transmission range of the assisting device 330_1, the coordinating device 320_1 forwards the assistance transmission request ATR to the coordinating device 320_2 to control the assisting devices 340_4-340_5 within a transmission range of the coordinating device 320_2 to provide the assisting broadcast service. At this time, since the range of the assisting broadcast service is extended, the price is correspondingly adjusted.

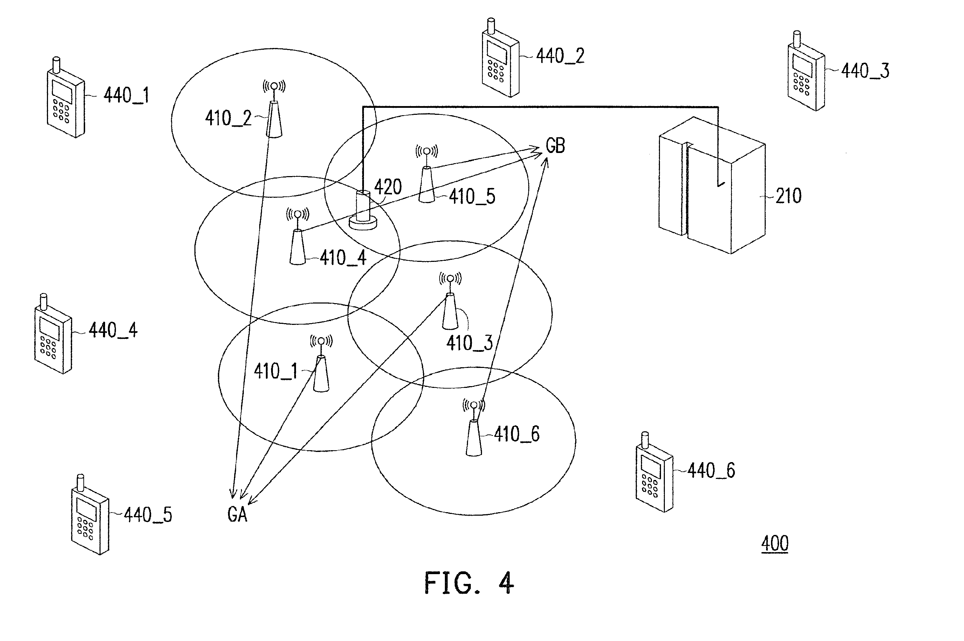

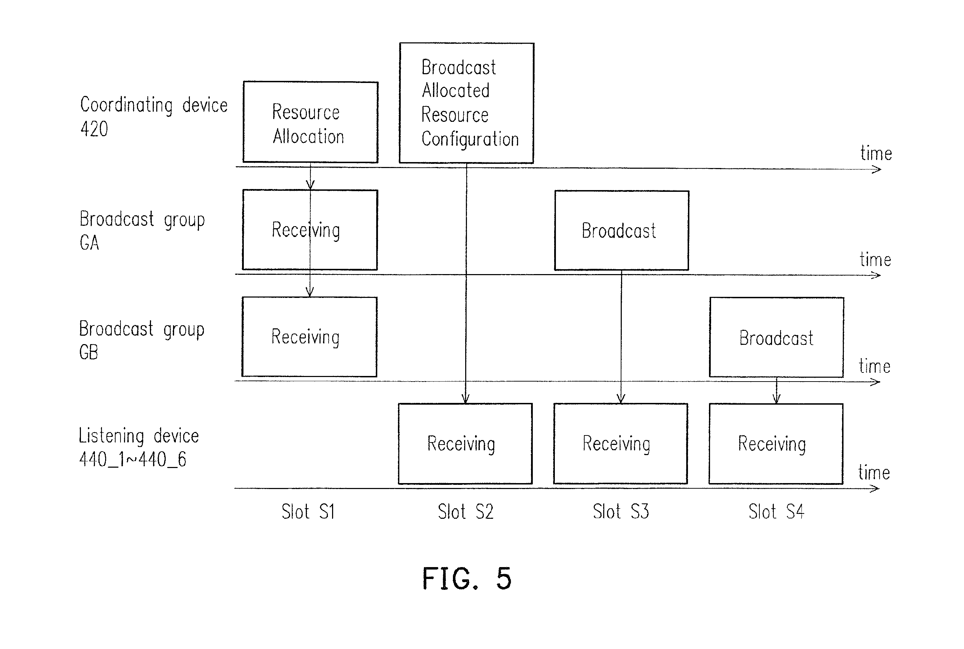

FIG. 4 is a schematic diagram illustrating a group transmission configuration according to an exemplary embodiment of the disclosure. FIG. 5 is a schematic flow illustrating a time domain repetition transmission method according to an exemplary embodiment of the disclosure. The time domain repetition transmission method represents that the assisting devices transmit the same broadcast content at different timing to avoid interferences. Referring to FIG. 4 and FIG. 5, in this embodiment, broadcast devices 410_1-410_6 (i.e. assisting devices), which are within the control range of a coordinating device 420, are divided into broadcast groups GA (including broadcast devices 410_1-410_3) and GB (including broadcast devices 410_4-410_6). In a slot S1, the coordinating device 420 performs resource allocation to the broadcast groups GA and GB to assign the broadcasting timing of the broadcast groups GA and GB.

Since the broadcast devices 410_1-410_6 may adopt the same transmission scheme, the broadcast devices 410_1-410_6 will interfere with each other if their transmission starts at the same time. Hence, the coordinating device 420 separates the transmission timing of the broadcast groups GA and GB in order to avoid mutual interference of the broadcast groups GA and GB. In a slot S2, the coordinating device 420 broadcasts the allocated resource configuration to listening devices 440_1-440_6 in order to inform the listening devices 440_1-440_6 about the timing of the transmission of the broadcast groups GA and GB. In a slot S3, the broadcast group GA (i.e. the broadcast devices 410_1-410_3) starts broadcasting the broadcast content (e.g., advertisement), and the listening devices 440_1-440_6 receive the broadcast content according to the allocated resource configuration. In a slot S4, the broadcast group GB (i.e. the broadcast devices 410_4-410_6) starts broadcasting the broadcast content (e.g., advertisement), and the listening devices 440_1-440_6 receive the broadcast content according to the allocated resource configuration.

With the separated transmission timing and deployment of the broadcast groups GA and GB, the interferences between the broadcast groups GA and GB are mitigated.

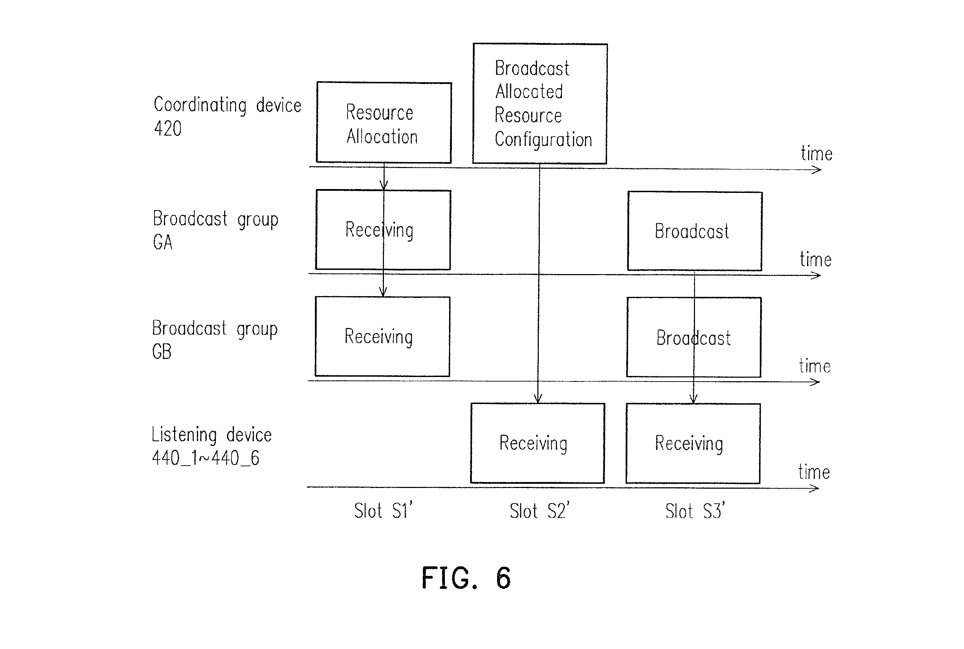

FIG. 6 is a schematic flow illustrating a concurrent transmission method according to an exemplary embodiment of the disclosure. The concurrent transmission method represents that the assisting devices transmit the same broadcast device at the same time. Referring to FIG. 4 and FIG. 6, in this embodiment, the broadcast groups GA and GB are arranged to transmit the broadcast content at the same timing with specifically configured transmission scheme. In a slot S1', the coordinating device 420 performs resource allocation to the broadcast groups GA and GB to assign the broadcasting timing of the broadcast groups GA and GB. In a slot S2', the coordinating device 420 broadcasts the allocated resource configuration to the listening devices 440_1-440_6 in order to inform the listening devices 440_1-440_6 about the timing of the transmission of the broadcast groups GA and GB. In a slot S3', the broadcast groups GA and GB simultaneously perform the transmission of the broadcast content.

If the broadcast groups GA and GB adopt the same transmission scheme, there may occur severe interferences between the broadcast groups GA and GB in the slot S3'. Therefore, if the concurrent transmission method is adopted, the transmission scheme of the broadcast groups GA and GB is appropriately configured. For example, the broadcast groups GA and GB adopt different transmission schemes to avoid mutual interferences. Some feasible implementation of the concurrent transmission method will be described as follows.

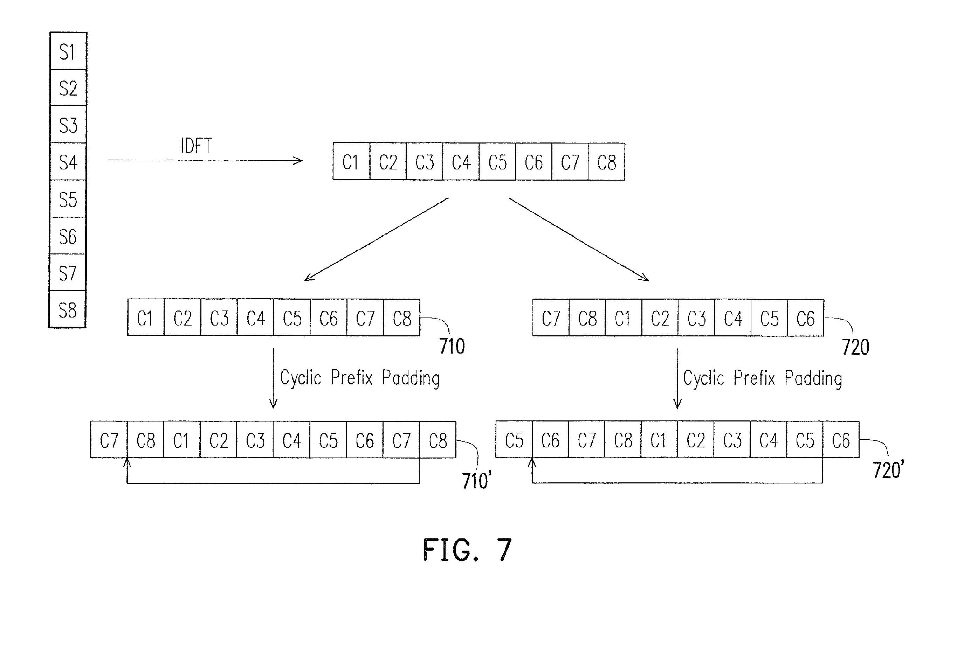

FIG. 7 is a schematic diagram illustrating a feasible implementation of the concurrent transmission method according to an exemplary embodiment of the disclosure. In this embodiment, orthogonal frequency division multiplexing (OFDM) transmission is adopted. It is assumed that subcarriers S1-S8 carries the signals of the broadcast content, and after an inverse discrete Fourier transform (IDFT), the subcarriers S1-S8 are transformed into OFDM symbols C1-C8. Afterwards, a first transmission scheme uses a symbol sequence 710, and a second transmission scheme uses a symbol sequence 720. The symbol sequence 710 uses, for example, its symbols C7-C8 as its cyclic prefix, and therefore the symbols C7-C8 are copied and padded before the symbol C1 of the symbol sequence 710. On the other hand, the symbol sequence 720 uses, for example, its symbols C5-C6 as its cyclic prefix, and therefore the symbols C5-C6 are copied and padded before the symbol C7 of the symbol sequence 720.

Referring to FIG. 6 and FIG. 7, in slot S3', the broadcast group GA may adopt the configuration of a symbol sequence 710' to perform transmission, and the broadcast group GB may adopt the configuration of a symbol sequence 720' to perform transmission. With different transmitted symbol configuration, the broadcast groups GA and GB avoid their mutual interferences in the slot S3' and simultaneously transmit the broadcast content to the listening devices 440_1-440_6.

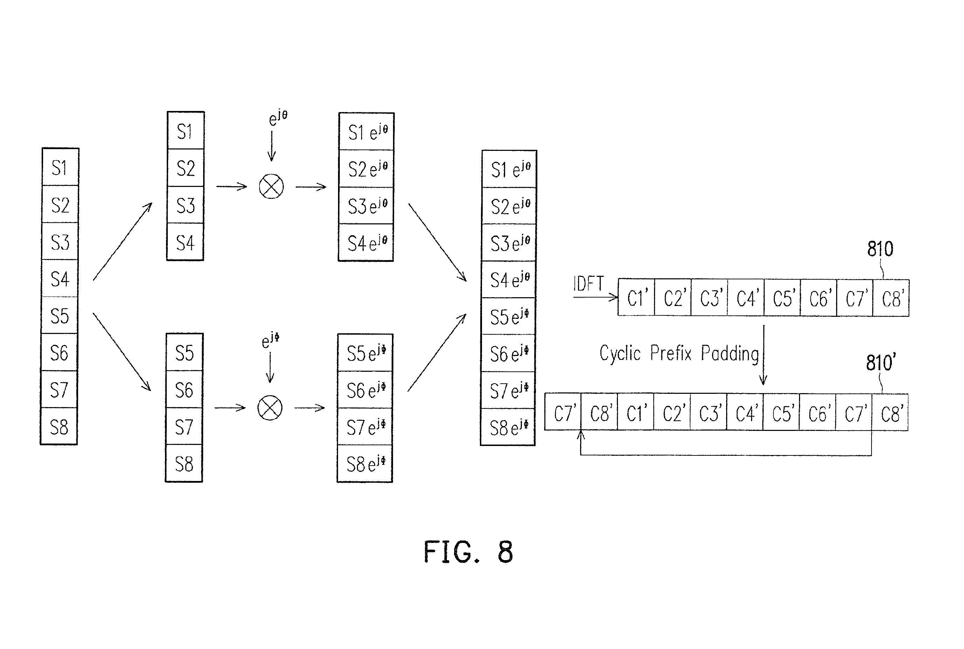

FIG. 8 is a schematic diagram illustrating a feasible implementation of the concurrent transmission method according to an exemplary embodiment of the disclosure. In this embodiment, OFDM transmission is still adopted. It is assumed that the subcarriers S1-S8 carry the signals of the broadcast content. Firstly, the subcarriers S1-S8 are categorized into two groups (i.e. the subcarriers S1-S4 and S5-S8). The subcarriers S1-S4 are multiplied by e^{jθ} (θ is a phase parameter), and the subcarriers S5-S8 are multiplied by e^{jΦ}(Φ is a phase parameter). The multiplied subcarriers S1-S8 are combined and transformed by IDFT to generate a symbol sequence 810 containing symbols C1'-C8'. The symbol sequence 810 uses, for example, its symbols C7'-C8' as its cyclic prefix, and therefore the symbols C7'-C8' are copied and padded before the symbol C1' of the symbol sequence 810. By adjusting the values of θ and Φ, other kind of symbol sequence is generated.

Referring to FIG. 6 and FIG. 8, in slot S3', the broadcast group GA may adopt the configuration of a symbol sequence 810' to perform transmission, and the broadcast group GB may adopt the configuration of another symbol sequence generated by other values of θ and Φ to perform transmission. With different transmitted symbol configuration, the broadcast groups GA and GB avoid their mutual interferences in the slot S3' and simultaneously transmit the broadcast content to the listening devices 440_1-440_6.

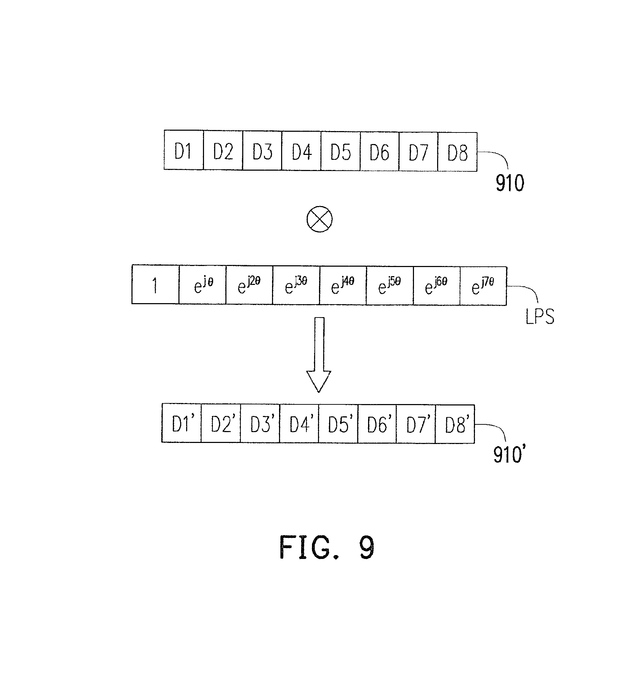

FIG. 9 is a schematic diagram illustrating a feasible implementation of the concurrent transmission method according to an exemplary embodiment of the disclosure. In this embodiment, it is assumed that a symbol sequence 910 (containing symbols D1-D8) represents the signals of the broadcast content. The symbols D1-D8 are multiplied by a linear phase shift vector LPS to generate a symbol sequence 910', wherein symbols D1' = D1×1, D2' = D2×e^{jθ}, D3' = D2×e^{j2θ}, and the rest of the symbol sequence 910' (i.e. D4'-D8') is correspondingly derived.

Referring to FIG. 6 and FIG. 9, in slot S3', the broadcast group GA may adopt the configuration of the symbol sequence 910 to perform transmission, and the broadcast group GB may adopt the symbol sequence 910'. With different transmitted symbol configuration, the broadcast groups GA and GB avoid their mutual interferences in the slot S3' and simultaneously transmit the broadcast content to the listening devices 440_1-440_6.

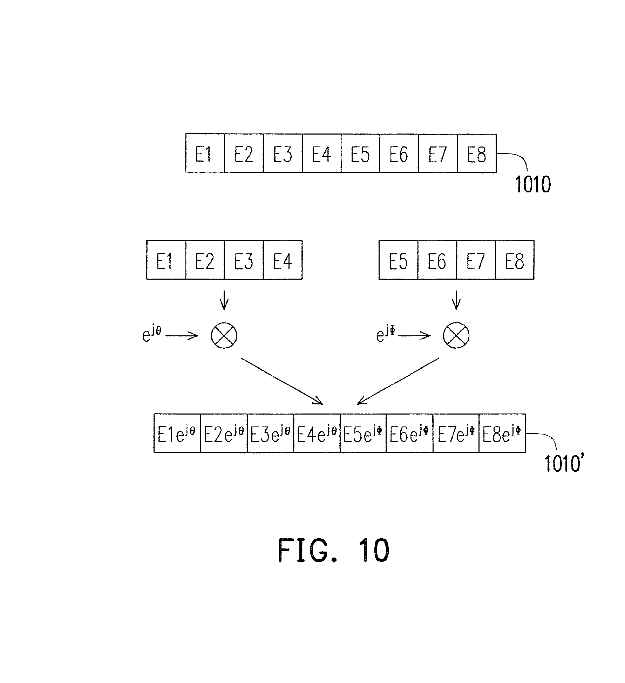

FIG. 10 is a schematic diagram illustrating a feasible implementation of the concurrent transmission method according to an exemplary embodiment of the disclosure. In this embodiment, it is assumed that a symbol sequence 1010 (containing symbols E1-E8) represents the signals of the broadcast content. The symbols E1-E8 are separated into two groups (i.e., the symbols E1-E4 and E5-E8). The symbols E1-E4 are respectively multiplied by e^{jθ}, and the symbols E5-E8 are respectively multiplied by e^{jΦ}. Afterwards, the multiplied symbols are combined to construct a symbol sequence 1010'. By adjusting the values of θ and Φ, other kind of symbol sequence is generated.

Referring to FIG. 6 and FIG. 10, in a slot S3', the broadcast group GA may adopt the configuration of a symbol sequence 1010' to perform transmission, and the broadcast group GB may adopt the configuration of another symbol sequence generated by other values of θ and Φ to perform transmission. With different transmitted symbol configuration, the broadcast groups GA and GB avoid their mutual interferences in the slot S3' and simultaneously transmit the broadcast content to the listening devices 440_1-440_6.

The differences between the embodiments illustrated in FIG. 8 and FIG. 10 are that in FIG.8, e^{jθ} and e^{jΦ} is multiplied by the subcarriers S1-S8. However, in FIG. 10, e^{jθ} and e^{jΦ} is multiplied by the symbols E1-E8. In other words, in FIG. 8, the multiplying operation is performed in the frequency domain, but in FIG. 10, the multiplying operation is performed in the time domain.

In addition, other transmission techniques (e.g., space-time block code, space-frequency block code and spatial multiplexing, etc.) may also be adopted to implement the concurrent transmission method. However, the disclosure is not limited thereto.

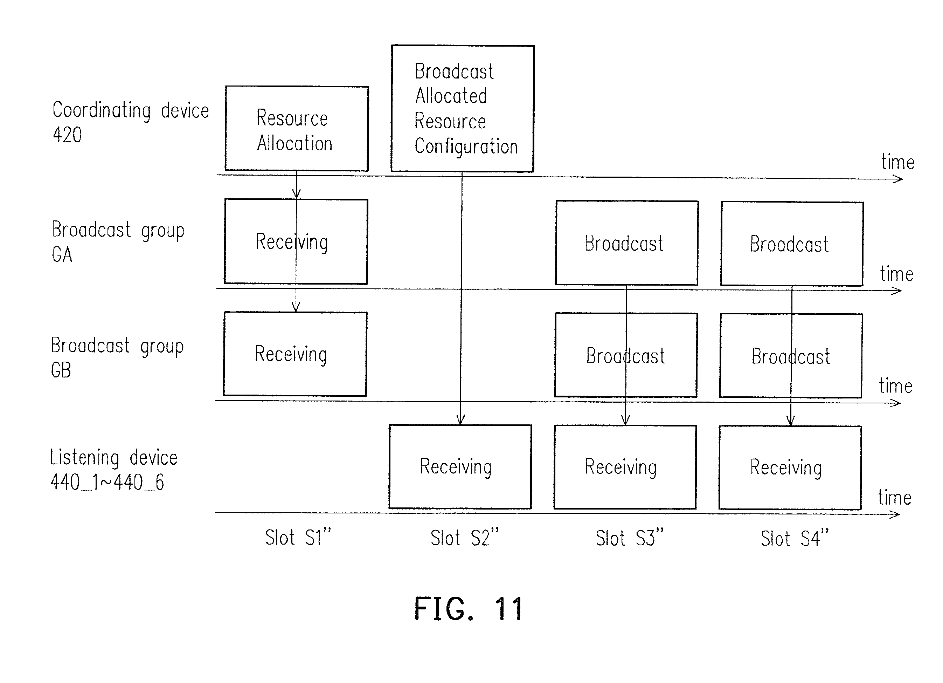

FIG. 11 is a schematic flow illustrating a hybrid implementation of both of the time domain repetition and the concurrent transmission method according to an exemplary embodiment of the disclosure. Referring to FIG. 4 and FIG. 11, in a slot S1", the coordinating device 420 performs resource allocation to the broadcast groups GA and GB to assign the broadcasting timing of the broadcast groups GA and GB. In a slot S2", the coordinating device 420 broadcasts the allocated resource configuration to the listening devices 440_1-440_6 in order to inform the listening devices 440_1-440_6 about the timing of the transmission of the broadcast groups GA and GB. In a slot S3", the broadcast group GA (i.e. the broadcast devices 410_1-410_3) and the broadcast group GB (i.e. the broadcast devices 410_4-410_6) adopt the concurrent transmission method and simultaneously start broadcasting the broadcast content (e.g., advertisement), and the listening devices 440_1-440_6 receive the broadcast content according to the allocated resource configuration. In a slot S4", both of the broadcast group GA (i.e. the broadcast devices 410_1-410_3) and the broadcast grout GB (i.e. the broadcast devices 410_4-410_6) broadcast the broadcast content (e.g., advertisement) again, and the listening devices 440_1-440_6 receive the broadcast content according to the allocated resource configuration.

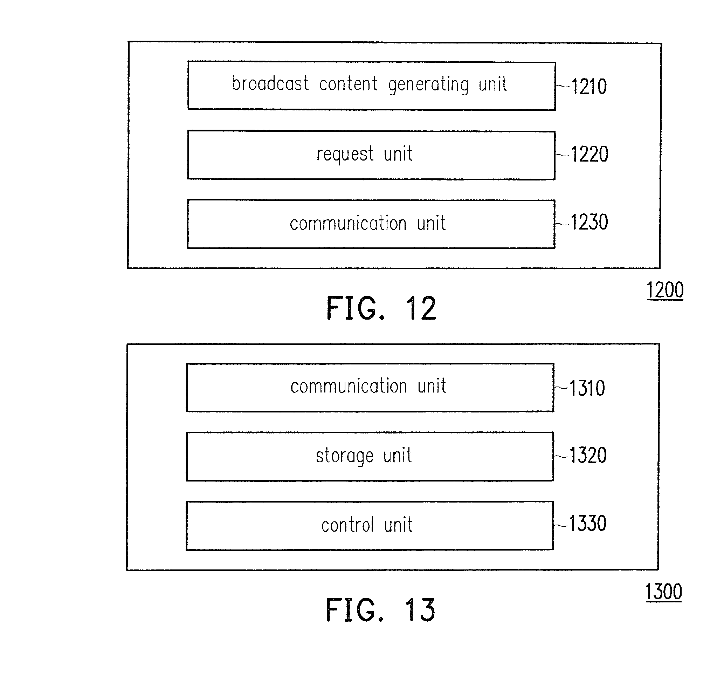

FIG. 12 is a functional block diagram illustrating a broadcast device 1200 according to an exemplary embodiment of the disclosure. In this embodiment, the broadcast device 1200 includes a broadcast content generating device unit 1210, a request unit 1220, and a communication unit 1230. The broadcast content generating device unit 1210 generates a broadcast content. The request unit 1220 generates an assistance transmission request for requesting at least one coordinating device for an assisting broadcast service. The communication unit 1230 transmits the broadcast content and the assistance transmission request to the at least one coordinating device, and receiving a confirm signal from the at least one coordinating device.

In an exemplary embodiment, the broadcast device 1200 may further include a price determination unit, which is configured for determining whether a price about the assisting broadcast service is acceptable.

FIG. 13 is a functional block diagram illustrating an assisting device 1300 according to an exemplary embodiment of the disclosure. In this embodiment, the assisting device 1300 includes a communication unit 1310, a storage unit 1320 and a control unit 1330. The communication unit 1310 receives a broadcast content. The storage unit 1320 stores the broadcast content. The control unit 1330 controls the communication unit 1330 to transmit the broadcast content to provide an assisting broadcast service in response to an assistance command received from a coordinating device.

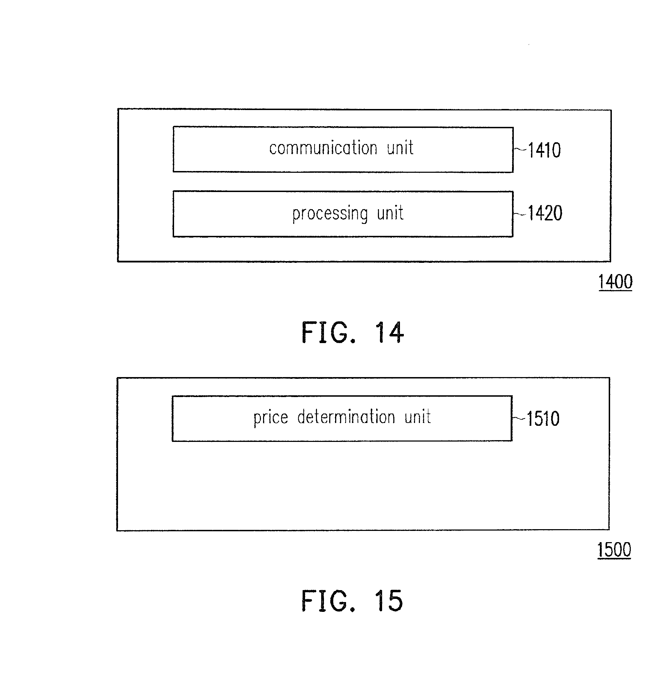

FIG. 14 is a functional block diagram illustrating a coordinating device 1400 according to an exemplary embodiment of the disclosure. In this embodiment, the coordinating device 1400 includes a communication unit 1410 and a processing unit 1420. The communication unit 1410 receives an assistance transmission request from a broadcast device. The processing unit 1420 generates an assistance command and a confirm signal in response to the assistance transmission request. After the assistance command is generated, the communication unit 1420 transmits the assistance command to at least one assisting device to perform an assisting broadcast service.

FIG. 15 is a functional block diagram illustrating a charging server 1500 according to an exemplary embodiment of the disclosure. In this embodiment, the charging severs 1500 includes a price determination unit 1510. The price determination unit 1510 is configured for determining a price about an assisting broadcast service requested by the broadcast device. In other embodiments, the charging server may further include a communication unit, which is configured for communicating with at least one coordinating device and a broadcast device. The communication between the charging server 1500 and other devices (e.g., coordinating devices, etc.) can be implemented by wired communications (e.g., Ethernet) or wireless communications (e.g., Bluetooth). In addition, the communication between the charging server 1500 and other devices can be implemented through various wired or wireless communication devices. The price determination unit 1510 is configured for determining a price about an assisting broadcast service requested by the broadcast device. The price is determined according to the number of assisting devices providing the assisting broadcast service or the number of coordinating devices associated with the assisting broadcast service. When the price is accepted by the broadcast device, the at least one coordinating device controls at least one assisting device to broadcast a broadcast content of the broadcast device to provide an assisting broadcast service. In another exemplary embodiment, the charging server may further include a storage server for storing associated information about the broadcast content.

In an exemplary embodiment, there are one or more processors, for executing the functions of the units of the device, the system and the server. In an exemplary embodiment, there are one or more processors configured for processing the steps of the methods.

In summary, embodiments of the disclosure provide a method for collaborative direct communication and a collaborative direct communication system using the same method, a broadcast device, an assisting device and a coordinating device. When the broadcast device asks for an assisting transmission service, the provided coordinating device commands the assisting devices within its controlling range to assist the broadcast device to transmit the broadcast content of the broadcast device. Therefore, with the assistance of the coordinating device and the assisting devices, the transmission range of the broadcast content is extended to a larger range compared with the transmission range of the broadcast device. Furthermore, when the broadcast device asks for the assisting broadcast service, a charging server is adopted to determine a price of the assisting broadcast service.

## Claims

1. A collaborative direct communication system (100, 200, 300, 400), comprising:
at least one coordinating device (120, 320_1, 320_2, 420, 1400), configured for receiving an assistance transmission request (ATR) based on a broadcast content which is to be transmitted, transmitting an assistance command (AC) to at least one assisting device (130_1∼130_3, 330_1∼330_3, 410_1∼410_6, 1300) in response to the assistance transmission request (ATR),
wherein the at least one assisting device (130_1∼130_3, 330_1∼330_3, 410_1∼410_6, 1300) assists an assisting broadcast service of transmitting the broadcast content in response to the assistance command (AC) for a broadcast device (110, 1200).

2. The collaborative direct communication system (100, 200, 300, 400) as claimed in claim 1, wherein the at least one coordinating device (120, 320_1, 320_2, 420, 1400) further transmits a confirm signal (CS) to the broadcast device (110, 1200),
wherein after the broadcast device (110, 1200) receives the confirm signal (CS), the broadcast device (110, 1200) and the at least one assisting device (130_1∼130_3, 330_1∼330_3, 410_1∼410_6, 1300) broadcast the broadcast content.

3. The collaborative direct communication system (100, 200, 300, 400) as claimed in claim 1, further comprising a charging server (210, 1500), configured for charging the broadcast device (110, 1200) for the assisting broadcast service.

4. The collaborative direct communication system (100, 200, 300, 400) as claimed in claim 3, wherein before the at least one coordinating device (120, 320_1, 320_2, 420, 1400) transmits the confirm signal (CS), the charging server (210, 1500) informs the broadcast device (110, 1200) about a price via an informing signal.

5. The collaborative direct communication system (100, 200, 300, 400) as claimed in claim 4, wherein the charging server (210, 1500) communicates with the broadcast device (110, 1200) through the at least one coordinating device (120, 320_1, 320_2,420, 1400),
wherein the charging server (210, 1500) receives a price confirm signal (PCS) representing that the price is acceptable for the broadcast device (110, 1200), the at least one coordinating device (120, 320_1, 320_2, 420, 1400) transmits the confirm signal (CS) to the broadcast device (110, 1200) and the assistance command (AC) to the at least one assisting device (130_1∼130_3, 330_1∼330_3, 410_1∼410__6, 1300).

6. The collaborative direct communication system (100, 200, 300, 400) as claimed in claim 1, further comprising a storage server, configured for storing associated information about the broadcast content.

7. The collaborative direct communication system (100, 200, 300, 400) as claimed in claim 3, wherein the charging server (210, 1500) charges the broadcast device (110, 1200) according to a number of the at least one assisting device (130_1∼130_3, 330_1∼330_3, 410_1∼410_6, 1300) providing the assisting broadcast service.

8. The collaborative direct communication system (100, 200, 300, 400) as claimed in claim 3, wherein the charging server (210, 1500) charges the broadcast device (110, 1200) according to a number of the at least one coordinating device (120, 320_1, 320_2, 420, 1400) associated with the assisting broadcast service.

9. The collaborative direct communication system (100, 200, 300, 400) as claimed in claim 1, wherein the at least one coordinating device (120, 320_1, 320_2, 420, 1400) forwards the assistance transmission request (ATR) to at least one of other coordinating devices (120, 320_1, 320_2, 420, 1400) to control other assisting devices (130_1∼130_3, 330_1∼330_3, 410_1∼410_6, 1300) within a transmission range of the at least one of the other coordinating devices (120, 320_1, 320_2, 420, 1400) to provide the assisting broadcast service.

10. The collaborative direct communication system (100, 200, 300, 400) as claimed in claim 1, wherein the at least one assisting device (130_1∼130_3, 330_1∼330_3, 410_1∼410_6, 1300) is divided into at least one broadcast group to provide the assisting broadcast service.

11. The collaborative direct communication system (100, 200, 300, 400) as claimed in claim 10, wherein the at least one broadcast group adopts a time domain repetition transmission method to provide the assisting broadcast service.

12. The collaborative direct communication system (100, 200, 300, 400) as claimed in claim 10, wherein the at least one broadcast group adopts a concurrent transmission method to provide the assisting broadcast service.

13. A method for collaborative direct communication, adapted to at least one coordinating device (120, 320_1, 320_2, 420, 1400) of a collaborative direct communication system (100, 200, 300, 400), the method comprising:
receiving by the at least one coordinating device (120, 320_1, 320_2, 420, 1400) an assistance transmission request (ATR) from a broadcast device (110, 1200) based on a broadcast content which is to be transmitted;
transmitting by the at least one coordinating device (120, 320_1, 320_2, 420, 1400) an assistance command (AC) to at least one assisting device (130_1∼130_3, 330_1∼330_3, 410_1∼410_6, 1300) in response to the assistance transmission request (ATR);
commanding by the at least one coordinating device (120, 320_1, 320_2, 420, 1400) at least one assisting device (130_1∼130_3, 330_1∼330_3, 410_1∼410_6, 1300) to provide an assisting broadcast service of transmitting the broadcast content by the assistance command (AC).

14. The method as claimed in claim 13, further comprising transmitting a confirm signal (CS) to the broadcast device (110, 1200) after receiving the assistance transmission request (ATR) from the broadcast device (110, 1200) based on the broadcast content which is to be transmitted; and
after the confirm signal (CS) is transmitted to the broadcast device (110, 1200), broadcasting the broadcast content by the broadcast device (110, 1200) and the at least one assisting device (130_1∼130_3, 330_1∼330_3, 410_1∼410_6, 1300).

15. The method as claimed in claim 14, wherein before the step of transmitting the confirm signal (CS) to the broadcast device (110, 1200), further comprising:
communicating with a charging server (210, 1500) to obtain a price about the assisting broadcast service; and
informing the broadcast device (110, 1200) about the price via an informing signal from the charging server (210, 1500).

16. The method as claimed in claim 15, wherein after receiving a price confirm signal (PCS) to represent the price is acceptable, transmitting the confirm signal (CS) to the broadcast device (110, 1200) and the assistance command (AC) to the at least one assisting device (130_1∼130_3, 330_1∼330_3, 410_1∼410_6, 1300).

17. The method as claimed in claim 15, wherein the price is determined according to a number of the at least one assisting device (130_1∼130_3, 330_1∼330_3, 410_1∼410_6, 1300) providing the assisting broadcast service.

18. The method as claimed in claim 15, wherein the price is determined according to a number of the at least one coordinating device (120, 320_1, 320_2, 420, 1400) associated with the assisting broadcast service.

19. The method as claimed in claim 13, further comprising:
forwarding the assistance transmission request (ATR) to at least one of other coordinating devices (120, 320_1, 320_2, 420, 1400) to control other assisting devices (130_1∼130_3, 330_1∼330_3, 410_1∼410_6, 1300) within a transmission range of the at least one of the other coordinating devices (120, 320_1, 320_2, 420, 1400) to provide the assisting broadcast service.

20. The method as claimed in claim 13, wherein the at least one assisting device (130_1∼130_3, 330_1∼330_3, 410_1∼410_6, 1300) is divided into at least one broadcast group to provide the assisting broadcast service.

21. The method as claimed in claim 20, wherein in the step of providing the assisting broadcast service, a time domain repetition transmission method is adopted by the at least one broadcast group.

22. The method as claimed in claim 20, wherein in the step of providing the assisting broadcast service, a concurrent transmission method is adopted by the at least one broadcast group.

23. A broadcast device (110, 1200), comprising:
a broadcast content generating unit (1210), configured for generating a broadcast content;
a request unit (1220), configured for generating a assistance transmission request (ATR) for requesting at least one coordinating device (120, 320_1, 320_2, 420, 1400) for an assisting broadcast service; and
a communication unit (1230, 1310, 1410), configured for transmitting the broadcast content and the assistance transmission request (ATR) to the at least one coordinating device (120, 320_1, 320_2, 420, 1400), and receiving a confirm signal (CS) from the at least one coordinating device (120, 320_1, 320_2, 420, 1400).

24. The broadcast device (110, 1200) as claimed in claim 23, further comprising:
a price determination unit (1510), configured for determining whether a price about the assisting broadcast service is acceptable.

25. The broadcast device (110, 1200) as claimed in claim 24, wherein the price is determined according to a number of at least one assisting device (130_1∼130_3, 330_1∼330_3, 410_1∼410_6, 1300) providing the assisting broadcast service.

26. The broadcast device (110, 1200) as claimed in claim 24, wherein the price is determined according to a number of the at least one coordinating device (120, 320_1, 320_2, 420, 1400) associated with the assisting broadcast service.

27. The broadcast device (110, 1200) as claimed in claim 23, wherein the at least one coordinating device (120, 320_1, 320_2, 420, 1400) forwards the assistance transmission request (ATR) to at least one of other coordinating devices (120, 320_1, 320_2, 420, 1400) to control other assisting devices (130_1∼130_3, 330_1∼330_3, 410_1∼410_6, 1300) within a transmission range of the at least one of the other coordinating devices (120, 320_1, 320_2, 420, 1400) to provide the assisting broadcast service.

28. The broadcast device (110, 1200) as claimed in claim 23, wherein at least one assisting device (130_1∼130_3, 330_1∼330_3, 410_1∼410_6, 1300) is divided into at least one broadcast group to provide the assisting broadcast service.

29. The broadcast device (110, 1200) as claimed in claim 28, wherein the at least one broadcast group adopts a time domain repetition transmission method to provide the assisting broadcast service.

30. The broadcast device (110, 1200) as claimed in claim 28, wherein the at least one broadcast group adopts a concurrent transmission method to provide the assisting broadcast service.

31. An assisting device (130_1∼130_3, 330_1∼330_3, 410_1∼410_6, 1300), comprising:
a communication unit (1230, 1310, 1410), configured for receiving a broadcast content;
a storage unit (1320), configured for storing the broadcast content; and
a control unit (1330), configured for controlling the communication unit (1230, 1310, 1410) to transmit the broadcast content to provide an assisting broadcast service in response to an assistance command (AC) received from a coordinating device (120, 320_1,320_2,420, 1400).

32. The assisting device (130_1∼130_3, 330_1∼330_3, 410_1∼410_6, 1300) as claimed in claim 31, wherein the communication unit (1230, 1310, 1410) receives the assistance command (AC) from the coordinating device (120, 320_1, 320_2, 420, 1400), and controlled by the control unit (1330) to perform the assisting broadcast service via transmitting the broadcast content.

33. The assisting device (130_1∼130_3, 330_1∼330_3, 410_1∼410_6, 1300) as claimed in claim 32, wherein a plurality of the assisting devices (130_1∼130_3, 330_1∼330_3, 410_1∼410_6, 1300) are divided into at least one broadcast group to provide the assisting broadcast service.

34. The assisting device (130_1∼130_3, 330_1∼330_3, 410_1∼410_6, 1300) as claimed in claim 33, wherein the at least one broadcast group adopts a time domain repetition transmission method to provide the assisting broadcast service.

35. The assisting device (130_1∼130_3, 330_1∼330_3, 410_1∼410_6, 1300) as claimed in claim 33, wherein the at least one broadcast group adopts a concurrent transmission method to provide the assisting broadcast service.

36. A coordinating device (120, 320_1, 320_2, 420, 1400), comprising:
a communication unit (1230, 1310, 1410), configured for receiving an assistance transmission request (ATR) from a broadcast device (110, 1200); and
a processing unit (1420), configured for generating an assistance command (AC) and a confirm signal (CS) in response to the assistance transmission request (ATR),
wherein after the assistance command (AC) is generated, the communication unit (1230, 1310, 1410) transmits the assistance command (AC) to at least one assisting device (130_1∼130_3, 330_1∼330_3, 410_1∼410_6, 1300) to perform an assisting broadcast service.

37. The coordinating device (120, 320_1, 320_2, 420, 1400) as claimed in claim 36, wherein the communication unit (1230, 1310, 1410) communicates with a charging server (210, 1500) to obtain a price about the assisting broadcast service, and informs the broadcast device (110, 1200) about the price via an informing signal.

38. The coordinating device (120, 320_1, 320_2, 420, 1400) as claimed in claim 37, wherein after receiving a price confirm signal (PCS) from the broadcast device (110, 1200), the communication unit (1230, 1310, 1410) transmits the confirm signal (CS) to the broadcast device (110, 1200) and the assistance command (AC) to the at least one assisting device (130_1∼130_3, 330_1∼330_3, 410_1∼410_6, 1300).

39. The coordinating device (120, 320_1, 320_2, 420, 1400) as claimed in claim 37, wherein the price is determined according to a number of the at least one assisting device (130_1∼130_3, 330_1∼330_3, 410_1∼410_6, 1300) providing the assisting broadcast service.

40. The coordinating device (120, 320_1, 320_2, 420, 1400) as claimed in claim 36, wherein the at least one assisting device (130_1∼130_3, 330_1∼330_3, 410_1∼410_6, 1300) is divided into at least one broadcast group to provide the assisting broadcast service.

41. The coordinating device (120, 320_1, 320_2, 420, 1400) as claimed in claim 40, wherein the at least one broadcast group adopts a time domain repetition transmission method to provide the assisting broadcast service.

42. The coordinating device (120, 320_1, 320_2, 420, 1400) as claimed in claim 40, wherein the at least one broadcast group adopts a concurrent transmission method to provide the assisting broadcast service.

43. A charging server (210, 1500), comprising:
a price determination unit (1510), configured for determining a price about an assisting broadcast service requested by a broadcast device (110, 1200),
wherein when the price is accepted by the broadcast device (110, 1200), at least one coordinating device (120, 320_1, 320_2, 420, 1400) controls at least one assisting device (130_1∼130_3, 330_1∼330_3, 410_1∼410_6, 1300) to broadcast a broadcast content of the broadcast device (110, 1200) to provide the assisting broadcast service.

44. The charging server (210, 1500) as claimed in claim 43, further comprising a communication unit (1230, 1310, 1410), configured for communicating with the at least one coordinating device (120, 320_1, 320_2, 420, 1400) or the broadcast device (110, 1200).

45. The charging server (210, 1500) as claimed in claim 43, further comprising a storage server, configured for storing associated information about the broadcast content.

46. The charging server (210, 1500) as claimed in claim 43, wherein the price is determined according to a number of the at least one assisting device (130_1∼130_3, 330_1∼330_3, 410_1∼410_6, 1300) providing the assisting broadcast service.

47. The charging server (210, 1500) as claimed in claim 43, wherein the price is determined according to a number of the at least one coordinating device (120, 320_1, 320_2, 420, 1400) associated with the assisting broadcast service.

48. The charging server (210, 1500) as claimed in claim 43, wherein the at least one assisting device (130_1∼130_3, 330_1∼330_3, 410_1∼410_6, 1300) is divided into at least one broadcast group to provide the assisting broadcast service.

49. The charging server (210, 1500) as claimed in claim 48, wherein the at least one broadcast group adopts a time domain repetition transmission method to provide the assisting broadcast service.

50. The charging server (210, 1500) as claimed in claim 48, wherein the at least one broadcast group adopts a concurrent transmission method to provide the assisting broadcast service.

51. A method for charging an assisting broadcast service, adapted to a charging server (210, 1500), the method comprising:
determining a price about the assisting broadcast service requested by a broadcast device (110, 1200),
wherein when the price is accepted by the broadcast device (110, 1200), at least one coordinating device (120, 320_1, 320_2, 420, 1400) controls at least one assisting device (130_1∼130_3, 330_1∼330_3, 410_1∼410_6, 1300) to broadcast a broadcast content of the broadcast device (110, 1200) to provide the assisting broadcast service.

52. The method as claimed in claim 51, wherein before determining the price about the assisting broadcast service requested by the broadcast device (110, 1200), further comprising communicating with the at least one coordinating device (120, 320_1, 320-2, 420, 1400) or the broadcast device (110, 1200).

53. The method as claimed in claim 51, wherein after the price is accepted by the broadcast device (110, 1200), further comprising storing associated information about the broadcast content.

54. The method as claimed in claim 51, wherein the price is determined according to a number of the at least one assisting device (130_1∼130_3, 330_1∼330_3, 410_1∼410_6, 1300) providing the assisting broadcast service.

55. The method as claimed in claim 51, wherein the price is determined according to a number of the at least one coordinating device (120, 320_1, 320_2, 420, 1400) associated with the assisting broadcast service.

56. The method as claimed in claim 51, wherein the at least one assisting device (130_1∼130_3, 330_1∼330_3, 410_1∼410_6, 1300) is divided into at least one broadcast group to provide the assisting broadcast service.

57. The method as claimed in claim 56, wherein the at least one broadcast group adopts a time domain repetition transmission method to provide the assisting broadcast service.

58. The method as claimed in claim 56, wherein the at least one broadcast group adopts a concurrent transmission method to provide the assisting broadcast service.
